**Europäisches Patentamt**

**European Patent Office**

**Office européen des brevets**

(11) Veröffentlichungsnummer: **0 080 016**
**B1**

(12) **EUROPÄISCHE PATENTSCHRIFT**

(45) Veröffentlichungstag der Patentschrift:
**12.06.85**

(21) Anmeldenummer: **82105976.3**

(22) Anmeldetag: **05.07.82**

(51) Int. Cl.⁴: **H 02 G 15/192**

(54) Verfahren zum Herstellen einer Kabelmuffe mit einem geteilten metallischen Stützmantel und derart hergestellte Kabelmuffe.

(30) Priorität: **24.11.81 DE 3146457**

(43) Veröffentlichungstag der Anmeldung:
**01.06.83 Patentblatt 83/22**

(45) Bekanntmachung des Hinweises auf die Patenterteilung:
**12.06.85 Patentblatt 85/24**

(84) Benannte Vertragsstaaten:
**AT BE CH DE FR GB IT LI LU NL SE**

(56) Entgegenhaltungen:
**FR - A - 1 490 917**
**FR - A - 1 591 718**
**FR - A - 2 326 063**
**FR - A - 2 373 903**
**US - A - 3 518 358**

(73) Patentinhaber: **Walter Rose GmbH & Co. KG,**
**Lütkenheider Strasse 2, D-5800 Hagen 1 (DE)**

(72) Erfinder: **Müller, Siegfried, Vollmannstrasse 25,**
**D-5800 Hagen 8 (DE)**
Erfinder: **Stupp, Winfried, Schmalenbeckstrasse 4,**
**D-5800 Hagen 1 (DE)**

(74) Vertreter: **Patentanwälte Meinke und Dabringhaus**
**Dipl.-Ing. J. Meinke Dipl.-Ing. W. Dabringhaus,**
**Westenhellweg 67, D-4600 Dortmund 1 (DE)**

## Beschreibung

Die Erfindung richtet sich auf ein Verfahren zur Herstellung einer Kabelmuffe mit einem geteilten metallischen Stützmantel und je einem als Kunststoffspritzteil ausgebildeten, mit jeweils mindestens einem wärmeschrumpffähigen Kabeleingang versehenen Muffenkopf an beiden Seiten des Stützmantels, bei welchem Verfahren in jeden Muffenkopf ein metallischer Stützring in axialer Richtung eingeschoben wird, der anschliessend mit dem Stützmantel formschlüssig verbunden wird, und bei welchem Verfahren der geteilte Stützmantel und wenigstens die diesem zugewandten Ränder der Muffenköpfe durch einen Kunststoffschrumpfschlauch miteinander verbunden werden, sowie auf eine nach diesem Verfahren hergestellte Kabelmuffe.

Bei bekannten Kabelmuffen dieser Art, beispielsweise bei den aus der DE-A Nr. 2542508 bekannten, weisen die Muffenköpfe auch aussen gerichtete Kabeleingänge oder sowohl nach aussen als auch nach innen gerichtete Kabeleingänge, wie im Fall der DE-A Nr. 2626510, oder nur nach innen gerichtete Kabeleingänge, wie im Fall der DE-A Nr. 2655548, auf.

Bei den bekannten Ausbildungen der Kabelmuffen sind die Stützringe lose in den Muffenköpfen eingeschoben oder nur durch Masstoleranzen eingeklemmt, was dazu führen kann, dass bei der Montage von Kabelmuffen die Stützringe versehentlich verschoben werden oder aber beim Aufschrumpfen des Kunststoffschrumpfschlauches um gewisse Beträge auswandern können.

Aufgabe der Erfindung ist es, ein Verfahren und eine danach hergestellte Kabelmuffe anzugeben, mit dem bzw. bei der die Stützringe in den Muffenköpfen dauerhaft festgelegt werden und unabhängig von der Handhabung bei der Montage der Kabelmuffen an ihrer vorbestimmten Lage verbleiben.

Bei einem Verfahren der eingangs bezeichneten Art wird diese Aufgabe gemäss der Erfindung dadurch gelöst, dass die Stützringe in die vom Spritzvorgang noch warmen Muffenköpfe eingeschoben werden, so dass die Stützringe durch Nachschrumpfen der Muffenköpfe an diesem festgelegt werden.

Wenn Spritzteile die Spritzformen verlassen, verfügen sie in der Regel noch über einen erheblichen Wärmeinhalt, der gegenüber der Umgebung abgegeben wird, wobei ein geringfügiges Nachschrumpfen der Spritzlinge erfolgt, die bei genauer Masshaltigkeit an der Spritzform entsprechend übertoleriert sind. Dies macht sich die Erfindung zunutze und erreicht durch das Einschieben der Stützringe in die noch warmen Muffenköpfe, dass diese sich durch ihr Restschrumpfverhalten völlig fest am Stützring anlegen und den Stützring damit verschiebungsfrei und verlierungsfrei halten.

Bei einer Kabelmuffe, hergestellt nach dem obigen Verfahren, sieht die Erfindung vor, dass der Stützring mit einer senkrecht zur Muffenkopfmittelachse stehenden Anlagefläche versehen ist, die in der Gebrauchslage mit einer entsprechenden am Muffenkopf ausgebildeten Anlagefläche zur Aufnahme von axialen Schub- und/oder Zugkräften zusammenwirkt. Diese Ausgestaltung unterstützt das vorstehend beschriebene Verbindungsverhalten zwischen Stützring und Muffenkopf in besonders zweckmässiger Weise, da durch das Nachschrumpfen nicht ein Kraftschluss zwischen aneinanderliegenden Flächen von Stützring und gespritzten Muffenkopf stattfindet, sondern zusätzlich ein Formschluss.

Nach einer weiteren Ausgestaltung der Erfindung kann auch vorgesehen sein, dass die Anlagefläche am Stützring als umlaufender, nach aussen ragender Steg und die Anlagefläche am Muffenkopf als Bereich mit erhöhter Materialstärke ausgebildet sind.

Als besonders zweckmässig hat es sich herausgestellt, dass der Querschnitt des Stützringes sich zur Muffenkopfstirnseite verjüngend ausgebildet ist, dass der nach aussen ragende Steg im Bereich des kleinsten Durchmessers des Stützringes vorgesehen ist, und dass im Bereich des grössten Durchmessers eine umlaufende Nut für den Eingriff entsprechend geformter Bereiche des metallischen Stützmantels der Kabelmuffe ausgebildet ist. Diese Ausgestaltung macht insbesondere die Montage des Stützringes in den noch warmen Spritzlingen besonders einfach, da bei dieser Ausgestaltung Rampen zum Einschieben des metallischen Stützringes gebildet sind.

Unter anderem zur Erleichterung der Montage kann nach der Erfindung auch vorgesehen sein, dass der Stützring mit einem in etwa parallel zur Muffenachse verlaufenden Schlitz versehen ist. Diese Schlitzung ist insbesondere dann vorgesehen, wenn bei von Überdruck beaufschlagten Kabelmuffen der im Inneren herrschende Überdruck den Stützring mit dem Muffenkopf noch gegen den aussenliegenden Schrumpfschlauch zur Erhöhung der Dichtwirkung treiben soll, insbesondere im Bereich, in dem der auslaufende Muffenkopf sehr dünnwandig gestaltet ist und dort eine Dichtlippe bildet.

Nach der Erfindung kann auch vorgesehen sein, dass die Stirnseite des Muffenkopfes unter Bildung eines am Aussenrand umlaufenden Vorsprunges zum Muffenkopfinneren zurückversetzt ist, wodurch sich mit einfachen Mitteln ein Hinterschnitt für den Schrumpfschlauch der damit gebildeten Kabelmuffe bildet, was u. a. deren Festigkeit besonders unterstützt und die Dichtwirkung zwischen Muffenkopf und Schrumpfschlauch erhöht.

Eine mit dem erfindungsgemässen Verfahren hergestellte Kabelmuffe wird nachstehend anhand der Zeichnung beschrieben. Diese zeigt in

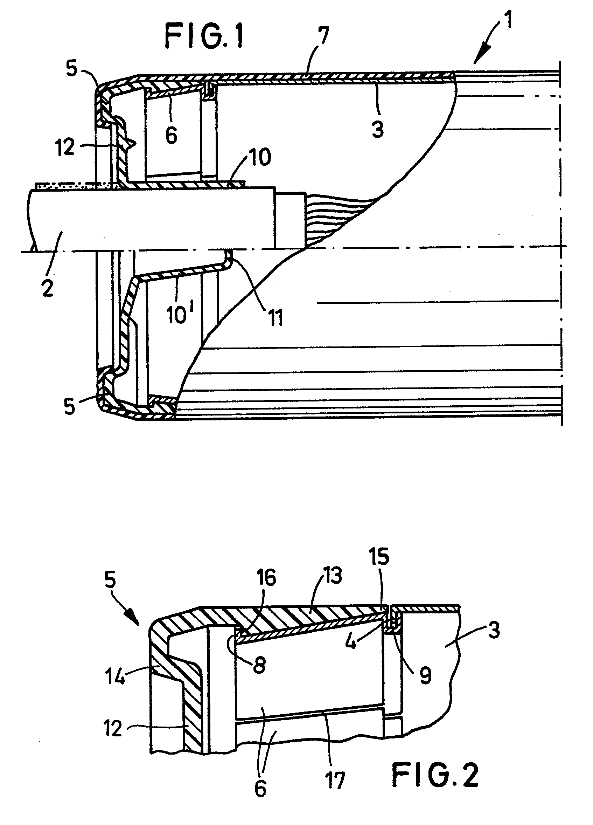

Fig. 1 (obere Hälfte) einen Bereich einer Kabelmuffe mit Muffenkopf und eingeführten Kabel, teilweise aufgeschnitten,

Fig. 1 (untere Hälfte) einen Teil der Kabelmuffe ohne Kabel mit dem Muffenkopf etwa in der das Spritzwerkzeug verlassenden Formgebung, und

Fig. 2 eine vergrösserte Darstellung eines Ausschnittes aus dem Muffenkopf mit Stützring.

Von einer Kabelmuffe 1 ist in Fig. 1 lediglich ein Eingangsbereich für den Eintritt eines Kabels 2 dargestellt und in gleicher Weise können dort Mehrfachkabeleingänge vorgesehen sein. Die Kabelmuffe wird im wesentlichen von zwei metallischen, halbzylindrischen Stützmantelteilen 3 mit einwärts gerichteten Bördelrändern 4, von wenigstens bereichsweise wärmeschrumpffähigen Muffenköpfen 5 mit einem metallischen Stützring 6 und einem Schrumpfschlauch 7 gebildet.

Der Stützring 6 ist im dargestellten Beispiel im wesentlichen kegelstumpfmantelförmig ausgebildet, d. h. in axialer Richtung gesehen verjüngt sich der Querschnitt von rechts nach links in den Figuren. Im Bereich des kleineren Durchmessers weist der Stützring 6 einen radial nach aussen ragenden Anlagesteg 8 und im Bereich des grösseren Durchmessers eine Umbördelung als umlaufende Eingriffsnut 9 auf, in die in der Gebrauchslage die Bördelränder 4 der Stützmantelteile 3 eingreifen, wie sich dies besonders deutlich aus Fig. 2 ergibt.

Der Muffenkopf 5 ist als Spritzteil ausgebildet mit im dargestellten Beispiel einem Kabeleingang 10, der in der oberen Hälfte von Fig. 1 als sowohl nach innen wie auch nach aussen ragendes Teil ausgebildet ist, während er in der unteren Figurenhälfte lediglich als zum Inneren der Muffe ragender Kabeleingang 10' wiedergegeben ist.

Die untere Hälfte von Fig. 1 zeigt den Zustand des Muffenkopfes 5, wie er vor der Montage eines Kabels 2 und vor Abschneiden des Spritzkopfes 11 ausgebildet ist. Das Abschneiden des Spritzkopfes 11 erfolgt werksseitig.

An den Kabeleingang 10, der schrumpfförmig ist, schliesst sich eine radial verlaufende Stegscheibe und am Rand ein axial verlaufender Bereich 13 an. Die Stegscheibe 12 ist nach aussen abgekröpft und bildet am Aussenrand einen umlaufenden Vorsprung 14 im Übergangsbereich zwischen Stegscheibe 12 und axial verlaufendem Bereich 13. Der Bereich 13 hat etwa einen keilförmigen Querschnitt, d. h. er ist an seinem freien Ende sehr dünnwandig zur Bildung einer Dichtlippe 15, sein Querschnitt nimmt dann stetig bis zu einer Anlagefläche 16 zu, hinter die in der Gebrauchslage der Anlagesteg 8 des Stützringes 6 greift, wie sich insbesondere aus Fig. 2 ergibt.

Der Stützring 6 kann mit einem etwa parallel zur Muffenachse verlaufenden Schlitz 17 versehen sein, um bei hohem Innendruck das Aufweiten des Bereiches 13 des Muffenkopfes 5, insbesondere im Bereich der Dichtlippe 15 zu ermöglichen. Der Schlitz 17 kann, wie dargestellt, auch etwas schräg zur Achse verlaufen.

Die Montage des Stützringes 6 erfolgt im noch warmen Zustand des Muffenkopfes 5. Dabei wird der Stützring 6 in dem Bereich 13 mit keilförmigem Querschnitt des Muffenkopfes eingeschoben und hintergreift dann mit dem Anlagesteg 8 die Anlagefläche 16. Durch das Nachschrumpfverhalten des Muffenkopfes schrumpft dieser auf den Stützring 6 auf, so dass beide Teile sehr gut aneinander festgelegt sind.

Wie sich insbesondere aus Fig. 1 (obere Figurenhälfte) ergibt, kann der Schrumpfschlauch 7 den Vorsprung 14 am Muffenkopf 5 hintergreifen, so dass dort zusätzlich allein durch Formschluss eine feste Verbindung hergestellt werden kann.

Der axial verlaufende Bereich 13 und/oder der umlaufende Vorsprung 14, die jeweils formschlüssig ineinandergreifen, können auch andere Formen annehmen, wenn dies zweckmässig sein sollte. So kann der Bereich 13 nur stellenweise am Umfang vorgesehen sein. Der Vorsprung 14 am Muffenkopf kann zur Reibungserhöhung geriffelt, gewellt oder in anderer Weise ausgebildet sein.

## Patentansprüche

1. Verfahren zur Herstellung einer Kabelmuffe (1) mit einem geteilten metallischen Stützmantel (3) und je einem als Kunststoffspritzteil ausgebildeten, mit jeweils mindestens einem wärmeschrumpffähigen Kabeleingang (10) versehenen Muffenkopf (5) an beiden Seiten des Stützmantels (3), bei welchem Verfahren in jeden Muffenkopf (5) ein metallischer Stützring (6) in axialer Richtung eingeschoben wird, der anschliessend mit dem Stützmantel (3) formschlüssig verbunden wird, und bei welchem Verfahren der geteilte Stützmantel (3) und wenigstens die diesem zugewandten Ränder der Muffenköpfe (5) durch einen Kunststoffschrumpfschlauch (7) miteinander verbunden werden, dadurch gekennzeichnet, dass die Stützringe (6) in die vom Spritzvorgang noch warmen Muffenköpfe (5) eingeschoben werden, so dass die Stützringe (6) durch Nachschrumpfen der Muffenköpfe (5) an diesen festgelegt werden.

2. Kabelmuffe, hergestellt nach dem Verfahren nach Anspruch 1, dadurch gekennzeichnet, dass der Stützring (6) mit einer senkrecht zur Muffenkopfmittelachse stehende Anlagefläche (8) versehen ist, die in der Gebrauchslage mit einer entsprechenden, am Muffenkopf (5) ausgebildeten Anlagefläche (16) zur Aufnahme von axialen Schub- und/oder Zugkräften zusammenwirkt.

3. Kabelmuffe nach Anspruch 2, dadurch gekennzeichnet, dass die Anlagefläche am Stützring (6) als umlaufender, nach aussen ragender Steg (8) und die Anlagefläche am Muffenkopf (5) als Bereich (16) mit erhöhter Materialstärke ausgebildet sind.

4. Kabelmuffe nach Anspruch 3, dadurch gekennzeichnet, dass der Querschnitt des Stützringes (6) sich zur Muffenkopfstirnseite verjüngend ausgebildet ist, dass der nach aussen ragende Steg (8) im Bereich des kleinsten Durchmessers des Stützringes (6) vorgesehen ist, und dass im Bereich des grössten Durchmessers eine umlaufende Nut (9) für den Eingriff entsprechend geformter Bereiche des metallischen Stützmantels (3) der Kabelmuffe (1) ausgebildet ist.

5. Kabelmuffe nach einem der vorangehenden Ansprüche, dadurch gekennzeichnet, das der Stützring (6) mit einem in etwa parallel zur Muffenachse verlaufenden Schlitz (17) versehen ist.

6. Kabelmuffe nach einem der vorangehenden Ansprüche, dadurch gekennzeichnet, dass die Stirnseite (12) des Muffenkopfes (5) unter Bildung eines am Aussenrand umlaufenden Vorsprunges (14) zum Muffeninneren zurückversetzt ist.

## Revendications

1. Procédé de fabrication d'un manchon de câble (1) comprenant une enveloppe de support métallique subdivisée (3) et, sur chacun des côtés de l'enveloppe de support (3), une tête de manchon (5) constituée sous la forme d'une pièce en matière plastique moulée par injection et comprenant au moins une entrée de câble (10) thermorétractable, lequel procédé prévoit dans chaque tête de manchon (5) une bague de support métallique (6) enfoncée en direction axiale, puis reliée par concordance de formes à l'enveloppe de support (3), le procédé prévoyant en outre que l'enveloppe de support subdivisée (3) et les bords au moins des têtes de manchon (5) qui sont tournés vers elle sont reliés les uns aux autres par une gaine en matière plastique thermorétractable (7), caractérisé en ce que les bagues de support (6) sont enfoncées dans les têtes de manchon (5) encore à l'état chaud après l'opération de moulage par injection, les bagues de support (6), après poursuite de la rétraction des têtes de manchon (5), s'appliquant de ce fait fermement contre ces dernières.

2. Manchon de câble réalisé selon la revendication 1, caractérisé en ce que la bague de support (6) est munie d'une surface d'appui (8) perpendiculaire à l'axe central de la tête de manchon, surface qui coopère en position d'utilisation avec une surface d'appui (16) correspondante constituée dans la tête de manchon (5) en vue d'absorber des forces de poussée et/ou de traction axiales.

3. Manchon de câble selon la revendication 2, caractérisé en ce que la surface d'appui de la bague de support (6) est constituée sous la forme d'une joue périphérique (8) faisant saillie vers l'extérieur et la surface d'appui de la tête de manchon (5) sous la forme d'une région (16) constituée par une épaisseur plus importante de matière.

4. Manchon de câble selon la revendication 3, caractérisé en ce que la section de la bague de support (6) est constituée de façon à aller en diminuant en direction du côté frontal de la tête de manchon, en ce que la joue (8) faisant saillie vers l'extérieur est prévue dans la région du plus petit diamètre de la bague de support (6), et en ce que dans la région du plus grand diamètre est constituée une gorge circulaire (9) destinée à l'introduction de régions de forme correspondante de l'enveloppe de support métallique (3) du manchon de câble (1).

5. Manchon de câble selon l'une des revendications précédentes, caractérisé en ce que la bague de support (6) est munie d'une fente (17) sensiblement parallèle à l'axe du manchon.

6. Manchon de câble selon l'une des revendications précédentes, caractérisé en ce que le côté frontal (12) de la tête de manchon (5) est enfoncé en direction de l'intérieur du manchon pour former une saillie périphérique (14) sur le bord extérieur.

## Claims

1. A method of producing a cable sleeve (1) having a split metal support casing (3) and a respective sleeve head (5) at both sides of the support casing (3), each sleeve head (5) being formed as a plastics injection moulding and being provided with at least one respective heat-shrinkable cable inlet (10), in which method a metal support ring (6) is inserted axially into each sleeve head (5) and is then positively connected to the support casing (3), and the split support casing (3) and at least the edges, which are theretowards, of the sleeve heads (5) are connected together by a plastics shrink tube (7), characterised in that the support rings (6) are inserted into the sleeve heads (5) while they are still warm from the injection moulding operation so that the support rings (6) are secured to the sleeve heads (5) by post-shrinkage thereof.

2. A cable sleeve produced by the method according to Claim 1, characterised in that the support ring (6) is provided with a contact surface (8) which is normal to the axial centre line of the sleeve head and which, in the position of use, co-operates with a corresponding contact surface (16) provided at the sleeve head (5), for carrying axial thrust and/or pulling forces.

3. A cable sleeve according to Claim 2, characterised in that the contact surface on the support ring (8) is formed as a peripheral, outwardly projecting web portion (8), and the contact surface on the sleeve head (5) is formed as a region (16) of increased material thickness.

4. A cable sleeve according to Claim 3, characterised in that the cross-section of the support ring (6) tapers towards the end of the sleeve head, that the outwardly projecting web portion (8) is disposed in the region of the smallest diameter of the support ring (6), and that formed in the region of the largest diameter is a peripheral groove (9) for the engagement therein of correspondingly shaped portions of the metal support casing (3) of the cable sleeve (1).

5. A cable sleeve according to one of the preceding claims, characterised in that the support ring (6) is provided with a slot (17) which extends substantially parallel to the axis of the sleeve.

6. A cable sleeve according to one the preceding claims, characterised in that the end (12) of the sleeve head (5) is set back towards the interior of the sleeve, forming a projection (14) which extends around the sleeve head at the outer edge.

FIG.1

FIG.2